# EUROPEAN PATENT APPLICATION

(11) **EP 4 814 887 A1**
(43) Date of publication of application: **30.09.2026**
(21) Application number: 26166333.0
(22) Date of filing: 20.03.2026
(51) Int. Cl.: G06V 10/74, G06V 10/764, G06V 10/778, G06V 10/80, G06V 10/82

(54) **DYNAMIC CUSTOMIZATION FOR OBJECT DETECTION**

(30) Priority: 28.03.2025 US 202519094053
(71) Applicant: Microsoft Technology Licensing, LLC, Redmond, WA 98052 (US)
(72) Inventor: KADOSH, Mordechai, Redmond, 98052 (US); HIRSHBERG, Tom, Redmond, 98052 (US); FIGOV, Zvi, Redmond, 98052 (US); HOFFMAN, Yonit, Redmond, 98052 (US)
(74) Representative: CMS Cameron McKenna Nabarro Olswang LLP

(57) **Abstract**

Systems and methods for dynamic customization for object detection. An object detector uses an object detection model (e.g., an open vocabulary model) to detect and classify objects. The object detector supports customization of classifications without requiring the model to be retrained. Embeddings are used to differentiate between various states of detections, enhancing accuracy and relevance of the detection process. In examples, the object detector handles logical conditions by creating a classifier trained to differentiate between various combinations of objects. Aspects of the present disclosure support the use of images for customization, allowing users to provide examples from which the object detector described herein can learn. In further examples, capabilities of the object detector extend to processing live video streams, where users can mark examples in real-time. In some examples, the object detector leverages a generative model (e.g., to provide state contrasts), allowing the system to be adaptable to complex conditions.

## Description

### BACKGROUND

Open vocabulary models are machine learning models that are trained to recognize and classify objects in images. A current approach to training a specific open vocabulary model is to train the model to recognize and classify objects for a specific class. In some examples, a change made to the model (e.g., adding an additional object class to detect) necessitates retraining of the model.

It is with respect to these and other considerations that examples have been made. In addition, although relatively specific problems have been discussed, it should be understood that the examples should not be limited to solving the specific problems identified in the background.

### SUMMARY

The technology described herein describes systems and methods to provide dynamic customization for object detection and classification. Aspects of the present disclosure offer a dynamic and efficient approach to object detection and customization, improving the user experience and operational efficiency. For instance, the object detector described herein supports customization of object detection that can be adjusted on the fly, enabling real-time updates and modifications without the need to retrain an object detection model (e.g., an open vocabulary model) or reprocess images. In some examples, text and image embeddings are used to differentiate between various states of detected objects, enhancing the accuracy and relevance of the detection process. In further examples, the object detector handles logical conditions (e.g., AND, OR) by creating a classifier trained to differentiate between various combinations of objects. Aspects of the present disclosure support the use of images for customization, allowing users to provide examples from which the object detector described herein can learn. In yet further examples, capabilities of the object detector extend to processing live video streams, for instance, where users can mark examples in real-time. In some examples, the object detector leverages a language model (e.g., to provide state contrasts), allowing the system to be adaptable to complex conditions.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
**FIGURE 1** is a diagram of a system in which an object detector is implemented for providing dynamic customization for object detection according to an example;
**FIGURE 2** is a diagram of a system in which an object detector is implemented for providing dynamic customization for object detection according to another example;
**FIGURE 3** is a diagram of a system in which an object detector is implemented for providing dynamic customization for object detection according to another example;
**FIGURE 4** is a diagram of a system in which an object detector is implemented for providing dynamic customization for object detection according to another example;
**FIGURE 5** is a diagram of a system in which an object detector is implemented for providing dynamic customization for object detection according to another example;
**FIGURE 6** is a diagram of a system in which an object detector is implemented for providing dynamic customization for object detection according to another example;
**FIGURE 7** depicts a flow chart of a method for providing dynamic customization for object detection according to an example;
**FIGURE 8** depicts a flow chart of a method for providing dynamic customization for object detection according to another example;
**FIGURE 9** depicts a flow chart of a method for providing dynamic customization for object detection according to another example;
**FIGURE 10** depicts a flow chart of a method for providing dynamic customization for object detection according to another example;
**FIGURE 11** depicts a flow chart of a method for providing dynamic customization for object detection according to another example;
**FIGURE 12** depicts a flow chart of a method for providing dynamic customization for object detection according to another example; and
**FIGURE 13** is a block diagram illustrating example physical components of a computing device with which examples of the disclosure may be practiced.

### DETAILED DESCRIPTION

Object detection is used to identify and locate objects within video frames or images. Typically, object detection requires training a model to recognize and classify specific objects or categories based on labeled training data. For instance, a model can be trained to detect instances of tables within a video or image data by providing labeled examples of tables in different contexts. One example of a model for object detection is an open vocabulary model. An open vocabulary model is a machine learning model capable of detecting and classifying objects beyond a fixed set of predefined categories. For instance, open vocabulary models may leverage external sources, such as text descriptions or embeddings from generative models.

In operation, training a model for a specific class/object comprises providing a dataset of labeled images or video frames as input to the model, allowing the model to learn patterns, features, and relationships associated with the target object(s) through machine learning modelling techniques. When a user desires to update the model (e.g., to add a class or object to the model), the model may need to be retrained by reprocessing a training dataset from the beginning, including previous and new training data. For example, if a user desires for the model to detect a specific state of a table (e.g., a dirty table or a clean table) or an additional class or object (e.g., detect chairs in addition to tables), the model has to be retrained on a comprehensive dataset that includes both the original images used for table detection and new images that represent the additional object classes or states. Retraining the model consumes extra compute processing resources, in addition to being time-consuming and inefficient. Additionally, reprocessing images using the retrained model consumes extra compute processing resources, particularly when there are multiple images to reprocess (e.g., frames of video).

The present disclosure resolves the above-discussed problems with updating/retraining models. Implementations of the present disclosure use an object detector including or in communication with one or a combination of object detection models to provide dynamic customization for object detection according to examples. This dynamic customization enables models to be updated at the time of detection (e.g., in real-time or near real-time) without requiring a retraining process on the original dataset and without requiring video/images to be reprocessed by the model. In examples, an object detector receives, as input, an indication of an object of interest to detect in an image. The indication of the object of interest may be received via various modalities and may identify a target object, a class of the object, and/or features of the target object that may be detected. In examples, the features of the target object represent a particular state of the target object. For instance, the object of interest may be a "dirty table," where the "table" is the target object and "dirty" is the particular state of the target object.

Prior to implementing aspects of the object detector described herein, previous object detection methods may return detections that represent both the particular state of the target object and other states of the target object. For instance, previous object detection methods may return detections that include both dirty and clean tables, as both dirty and clean tables may be closer to an object class of the target object than other objects (e.g., chairs, food, or people) detected in the image. The object detector described herein is operative to differentiate between various states of an object detected in an image (e.g., a clean table versus a dirty table). Thus, the accuracy and relevance of object detection is enhanced.

In further examples, the object detector handles logical conditions (e.g., AND, OR) by creating a classifier trained to differentiate between various combinations of objects. For instance, the object of interest may have a state defined by a logical condition (e.g., a statement that can be classified as true or false to determine the state of an object). For example, "a dirty table with a bottle" is a logical condition that is determined as true if the object (e.g., a table) is detected and a logical state corresponding to the object of interest (e.g., both dirty and has a bottle)) is determined to be satisfied. Logical states are the possible outcomes that the object can have based on the logical condition. For instance, logical states not corresponding to the object of interest are associated with the object of interest with a contrast state (e.g., a clean table with or without a bottle or a dirty table without a bottle). Accordingly, the logical condition is determined as false if the object (e.g., a table) is not detected or if the object is detected and the logical state corresponding to the object of interest (e.g., is both dirty and has a bottle)) is determined not to be satisfied.

In examples, the object detector receives example images representing each logical state associated with the logical condition of the object of interest. Thus, all logical states of the logical condition of the object of interest are individually and collectively represented in the example images. In further examples, the object detector leverages a generative model (e.g., to provide state contrasts), allowing the system to be adaptable to complex conditions.

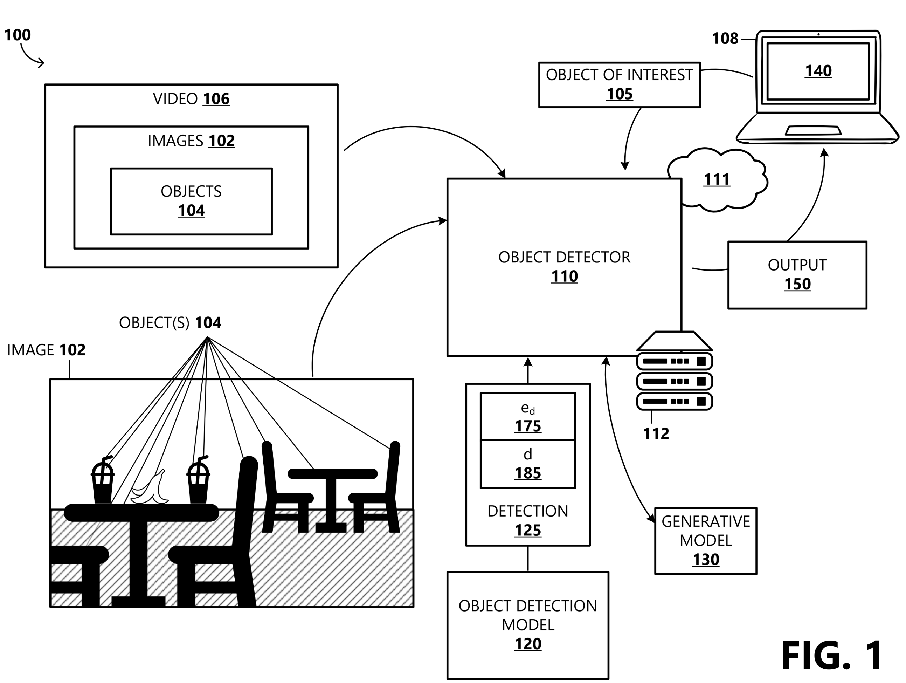

In some implementations, the object detector uses an object detection model to determine an embedding for each logical state and then trains a classifier to differentiate between the logical states based on the logical state example embeddings. Thus, when a detection is made of an object of a same object class as the object of interest (e.g., a table), the object detector uses the classifier to determine whether the logical condition is true or false. For instance, the classifier determines the logical state that best matches the detection. When the OOI logical state (e.g., both dirty and has a bottle) is determined to be satisfied, the logical condition is determined as true. Further, the detection is determined to be the object of interest. Alternatively, when another of the logical states (e.g., corresponding to a contrast state) is determined to be satisfied, the logical condition is determined as false and, thus, the detection is not the object of interest. In some examples, capabilities of the object detector extend to processing live video streams, where users can mark examples in real-time as an object of interest. These and other examples are described based below with reference to **FIGURES 1-6****.**

According to an aspect, a method is provided, comprising: comprising: receiving a first image; receiving an object of interest having an object class and a state; identifying a detection in the first image based on the object class; generating a first representation of the detection; determining a contrast state to the state; generating a second representation of the object class and the state; generating a third representation of the object class and the contrast state; comparing a first similarity measure between the first representation and the second representation to a second similarity measure between the first representation and the third representation; generating a first classification of the detection based on whether the first similarity measure is less than the second similarity measure or whether the second similarity measure is less than the first similarity measure; and providing an output of the first classification.

According to an aspect, a computer system is provided comprising: a processing system; and memory comprising computer program instructions for performing operations comprising: a processing system; and memory storing instructions that, when executed, cause the system to perform operations comprising: receiving a first image; receiving an object of interest having an object class and a state; identifying a detection in the first image based on the object class; generating a first embedding of the detection; determining a contrast state to the state; generating a second embedding of the object class and the state; generating a third embedding of the object class and the contrast state; comparing a first distance between the first embedding and the second embedding to a second distance between the first embedding and the third embedding; generating a first classification of the detection based on whether the first distance is less than the second distance or whether the second distance is less than the first distance; and providing an output of the first classification.

According to an aspect, a computer readable medium storing instructions is provided that, when executed by a computer, cause the computer to: receive a first image; receive an object of interest having an object class and a state; determining whether the state includes a logical condition; when the state does not include the logical condition: identify a detection in the first image based on the object class; generate a first embedding of the detection; determine a contrast state to the state; generate a second embedding of the object class and the state; generate a third embedding of the object class and the contrast state; compare a first distance between the first embedding and the second embedding to a second distance between the first embedding and the third embedding; and generate a first classification of the detection based on whether the first distance is less than the second distance or whether the second distance is less than the first distance; and provide an output of the first classification; and when the state includes the logical condition: determine a set of logical states based on the logical condition, wherein a first logical state of the set corresponds to the state and one or more second logical states of the set correspond to the contrast state; receive a second image for each logical state in the set, where each second image includes an example of the object class and the logical state; generate, for each logical state, a fourth embedding of each example of the object class and the logical state; compare a third distance between the first embedding and each fourth embedding; generate a second classification of the detection based on the third distance; and provide an output of the second classification.

**FIGURES 1-6** illustrate example systems **100, 200, 300, 400, 500,** and **600** in which an object detector **110** is included for providing dynamic customization for object detection according to an example implementation. Although the example systems **100, 200, 300, 400, 500,** and **600** are depicted as including a particular combination of computing environments, devices, networks, etc., the scale and structure of the systems **100, 200, 300, 400, 500,** and **600** may vary and may include additional or fewer components and in different arrangements than those described in **FIGURES 1-6****.** The object detector **110** is a software application, system, or module that operates on a computing device **112,** such as a server in a network **111** (e.g., a wide area network (the Internet), a local area network, a cellular data network, and combinations or derivatives thereof), a desktop computer, laptop computer, mobile device, gaming device, or other type of operating environment supporting dynamic customization for object detection according to examples. In examples, object detection includes finding a presence of the object **104** in an image **102** (or a plurality of images **102**) and identifying a class of the object **104.** In some examples, localizing the object **104** further includes determining a location of the object **104** in the image(s) **102,** such as by determining coordinates for the object **104** or drawing a bounding box around the object **104.** In examples, coordinates of the object **104** are represented by values that indicate pixel positions in the image(s) **102.**

According to examples, the object detector **110** receives, as input, image(s) (i.e., one or a plurality of images) **102.** In some examples, the image(s) **102** correspond to frames of a video **106.** The image(s) **102** may be stored in an image store or provided by a client computing device (client **108**) in communication with the object detector **110.** In some examples, the image(s) **102** are provided in real-time or near real-time as the image(s) **102** are captured (e.g., by a camera or plurality of cameras). The client **108** may be operated by a user. For instance, the image **102** is provided to the object detector **110** by the user via the client **108.** In examples, the object detector **110** provides a user interface **140** via which the user of the client **108** can interact to provide input and via which output **150** from the object detector **110** is presented to the user. In some implementations, the object detector **110** may run on the client **108** (and, thus, the computing device **112** on which the object detector **110** runs and the client **108** may be the same device).

In further examples, the object detector **110** further receives, as input, an indication of an object of interest **105** indicating a target object **104,** a class of the object **104,** and/or features of the object **104** to detect in an image **102.** In some examples, the object of interest **105** is received as text (e.g., a word, a phrase, a sentence, a statement, a question, and/or a combination thereof) that specifies or describes the object **104** that the user wants the object detector **110** to recognize. As an example, the user may provide a textual input, such as "dirty table" or "can you find all the dirty tables?" to guide the object detector **110** to identify dirty tables in the images **102.** In other examples, the object of interest **105** is received in the form of an image that includes an example object representing or otherwise indicating the object **104** that the user wants the object detector **110** to recognize. For instance, at an event, the user may provide an image of a specific type of bag (e.g., a backpack with a patch) or a clothing item with a particular feature or characteristic (e.g., a striped shirt) to guide the object detector **110** to identify backpacks with a patch or striped shirts in images **102.**

According to an aspect, the object detector **110** includes or is in communication with one or more object detection models (collectively, object detection model **120**). In some implementations, the object of interest **105** is known prior to processing an image **102** for object detection. In such cases, the object detection model **120** may employ a closed vocabulary model or a specific object detection model which is trained on a predefined dataset that explicitly includes the object of interest **105.** For instance, the term "closed vocabulary model," as used herein, refers to an object detection model trained on a set of training data and operative to detect objects **104** in an image **102** of a class or classes (e.g., categories of objects sharing a common characteristic) explicitly included in the set of training data. A closed vocabulary model may be implemented as or using a Faster R-CNN (Region-based Convolutional Neural Network), YOLO (You Only Look Once) algorithm, SSD (Single Shot MultiBox Detector), or Mask R-CNN, and may be trained on datasets such as COCO (Common Objects in Context), Pascal VOC (Visual Object Classes), or ImageNet. These examples of closed vocabulary models utilize supervised learning techniques, where large annotated datasets are used to learn object representations and bounding box predictions. For instance, if the closed vocabulary model is trained on a dataset including images of objects of a particular class, such as various images of fruits, the closed vocabulary model may learn to recognize and classify the different types of fruits included in the training data (e.g., apples, bananas, oranges, or grapes) in new image(s) **102.**

In other implementations, the object detection model **120** may employ an open vocabulary model that leverages text embeddings and image embeddings within a shared latent space to detect objects **104** in an image **102** of classes not explicitly included in the set of training data. For example, an open vocabulary model transforms text data and image data into a common representation format, which allows the text data and image data to be compared and combined. For instance, the open vocabulary model uses text embeddings to encode a semantic meaning of words or phrases and image embeddings representing visual data. Thus, the open vocabulary model is operative to align text and image embeddings to associate visual features of objects **104** in images **102** with their corresponding textual descriptions. Further, the open vocabulary model leverages the learned associations between the text and image embeddings to generalize to new classes. For instance, if the open vocabulary model is trained on images of common household pets, such as cats and dogs, the open vocabulary model may also learn to detect other types of pets, such as ferrets or hamsters, by leveraging the semantic meaning of related textual descriptions and visual similarities.

In some examples, the object detection model **120** receives an image **102** as an input, detects objects **104** in the image **102,** and provides an output including one or more detections **125** (e.g., the detected objects **104**) including an embedding (referred to herein as a detection embedding (e_{d}) **175** of each detection **125** and a description **185** of the detection **125.** In examples, the description **185** includes a determined class and location (e.g., coordinates or a bounding box) of the detection **125** in the image **102.** In some examples, the description **185** further includes an identifier of the image **102** (e.g., a frame number, an image number, or an image name). In other examples, the object detection model **120** receives an image **102** and an object of interest **105** as inputs, detects objects **104** in the image **102** with features relevant to a determined class of the object of interest **105,** and provides an output including one or more detections **125** (e.g., the detected objects **104**).

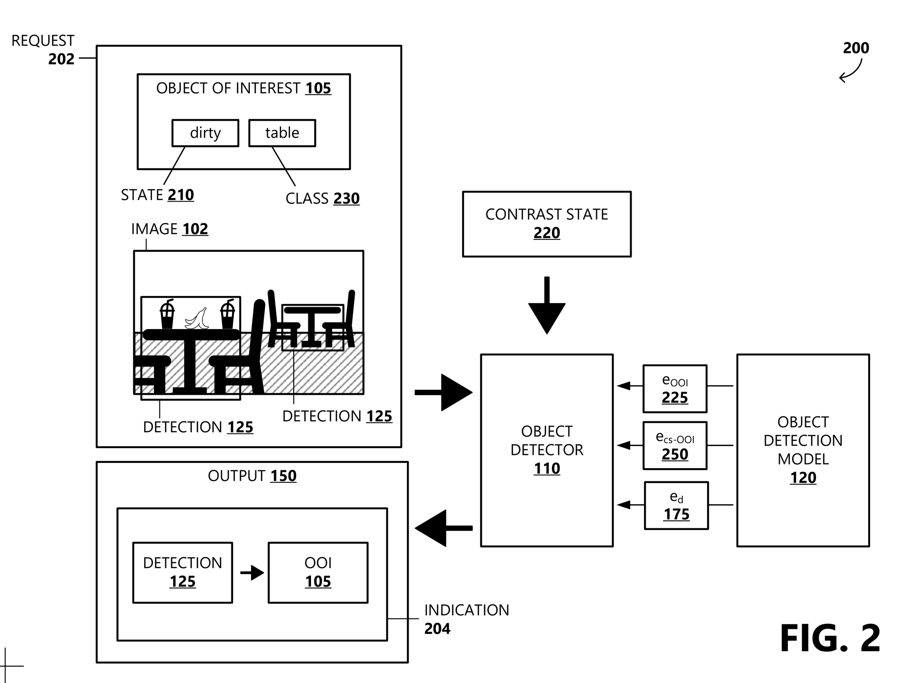

According to an aspect, the object detector **110** leverages output from the object detection model **120** to provide zero-shot learning (ZSL) functionality, where the object detector **110** is enabled to recognize and categorize objects **104** in images **102** without having seen any examples of the objects' classes during training. Thus, when a change is made to the object detection model **120** or a new class (of an object of interest **105**) is introduced, the object detector **110** is able to provide dynamic customization to object detection in real time or near-real time. With reference to **FIGURE 2****,** the object detector **110** is operative to differentiate between various states **210** of an object **104** (e.g., a clean table versus a dirty table) and, thus, enhance accuracy and relevance of object detection. For instance, without implementing aspects of the disclosure, in response to a request **202** for object detection of an object of interest **105** with a state (e.g., a dirty table) in an image **102,** the object detector **110** may return detections **125** that include both dirty and clean tables, as both dirty and clean tables may be closer to an object class **230** of the object of interest **105** than other objects **104** (e.g., chairs, food, or people) detected in the image **102.**

In some examples, when an object of interest **105** has a state **210** (e.g., an object **104** and an adjective, phrase, or other indication of a feature or condition of the object **104**), the object detector **110** determines a contrast state **220** to the state **210.** The contrast state **220** is a feature or condition of the object **104** that differs from (e.g., is in contrast to) the state **210.** In some implementations, the object detector **110** provides (e.g., via the user interface **140**), an indication to provide the contrast state **220** to the state **210.** In response, a user input is received including the contrast state **220,** where the contrast state **220** may be provided as text or an image. An image of the contrast state **220** may include an example object representing (or otherwise indicating) the object of interest **105** with the contrast state **220.** In some examples, a plurality of contrast states **220** are determined (e.g., received from the user). For instance, the object of interest **105** may have a state (e.g., a striped shirt) with a plurality of contrasts to the state (e.g., a solid shirt, a polka dotted shirt, a plaid shirt, a floral shirt).

In other implementations, the object detector **110** is in communication with a generative model **130.** The term "generative model," as used herein, refers to a machine learning model employed to generate new content. The generative model may operate across various domains (e.g., text, images, video, and multi-modal data) to create new content based on learned patterns. The term "machine learning model" refers to any of a broad range of models that can learn to generate automated user input and/or application output by observing properties of past interactions between users and applications. For instance, a machine learning model could be a neural network, a support vector machine, a decision tree, or a clustering algorithm. In some cases, a machine learning model can be trained using labeled training data, a reward function, or other mechanisms. A reward function, as used herein, defines a goal and/or feedback for an agent (e.g., an intelligent agent configured as an entity that perceives its environment and autonomously performs actions to achieve goals) and influences the agent's behavior and learning by assigning numerical scores (e.g., rewards or penalties) to actions and states of the agent. In other cases, a machine learning model can learn by analyzing data without explicit labels or rewards.

One type of generative model **130** is a "generative language model," which is a model that can generate new sequences of text given some input. One type of input for a generative language model is a natural language prompt, e.g., a query potentially with some additional context. For instance, a generative language model can be implemented as a neural network, e.g., a long short-term memory-based model, a decoder-based generative language model, etc. Examples of decoder-based generative language models include versions of models such as GPT, BLOOM, PaLM, Mistral, Gemini, and/or LLaMA. Generative language models can be trained to predict tokens in sequences of textual training data. When employed in inference mode, the output of a generative language model can include new sequences of text that the model generates.

Another type of generative model **130** is a "generative image model," which is a model that generates images or video. For instance, a generative image model can be implemented as a neural network, e.g., a generative image model such as one or more versions of Stable Diffusion, DALL-E, Sora, or GENIE. A generative image model can generate new image or video content using inputs such as a natural language prompt and/or an input image or video. One type of generative image model is a diffusion model, which can add noise to training images and then be trained to remove the added noise to recover the original training images. In inference mode, a diffusion model can generate new images by starting with a noisy image and removing the noise. Note also that generative image models can generate videos, and the term "image" also encompasses two-dimensional and three-dimensional video.

In some cases, a generative model **130** can be multi-modal. For instance, a model may be capable of using various combinations of text, images, video, audio, application states, code, or other modalities as inputs and/or generating combinations of text, images, video, audio, application states, or code or other modalities as outputs. Here, the term "generative language model" encompasses multi-modal generative models where at least one mode of output includes natural language tokens. Likewise, the term "generative image model" encompasses multi-modal generative models where at least one mode of output includes images or video. Examples of multi-modal models include certain GPT variants such as GPT-4o, Gemini, Chameleon, etc. Multi-modal models can also include lightweight models such as Phi-3-Vision-128K-Instruct.

In addition, some generative models **130** can include computer vision capabilities. These models are capable of recognizing objects in input images. The term "computer vision model" encompasses multi-modal models such as one or more versions of CLIP (Contrastive Language-Image Pre-Training) and BLIP (Bootstrapping Language-Image Pre-Training). Note the term "computer vision model" also encompasses non-generative models, such as ResNet (Residual Neural Network), Faster-R-CNN, etc. The term "vision language model" refers to any multi-modal generative model that can generate text describing images or videos, including CLIP, BLIP, Vision-and-Language BERT (Bidirectional Encoder Representations from Transformer), Flamingo, Chameleon, etc.

The term "prompt," as used herein, refers to a seed provided to a generative model **130** that the generative model **130** uses to generate outputs. A prompt can be provided in various modalities, such as text, an image, audio, video, etc. In some examples, a prompt to a generative model **130** requests output in a particular form (e.g., natural language or an image).

In examples, the object detector **110** provides a prompt to the generative model **130** including the state **210** of the object of interest **105** and an indication to provide the contrast state **220** to the state **210.** The object detector **110** further receives, as output from the generative model **130,** the contrast state **220** (or a plurality of contrast states).

In examples, the object detector **110** uses the object detection model **120** to generate an embedding of the object of interest **105** (an object of interest (OOI) embedding (e_{OOI}) **225**). For instance, when the object of interest **105** has a state **210,** the OOI embedding (e_{OOI}) **225** includes an embedding representing the object class **230** and the state **210.** Additionally, the object detector **110** uses the object detection model **120** to generate an embedding representing the object class **230** of the object of interest **105** and the contrast state **220** (referred to herein as a contrast-state OOI embedding (e_{cs-OOI}) **250**).

According to an aspect, in response to a request **202** for object detection of an object of interest **105** with a state **210,** the object detector **110** selects detection embeddings (e_{d}) **175** of detections **125** of a same object class **230** as the object of interest **105** and determines a measure of similarity or dissimilarity (e.g., distances) between the detection embeddings (e_{d}) **175** and the OOI embedding (e_{OOI}) **225** and between the detection embeddings (e_{d}) **175** and the contrast-state OOI embedding (e_{cs-OOI}) **250.** Examples of distance metrics used to calculate the measure include cosine similarity, Euclidean distance, Chebyshev distance, and Hamming distance. The object detector **110** further compares the measures. When the distance between the detection embedding (e_{d}) **175** of a detection **125** and the OOI embedding (e_{OOI}) **225** is less (i.e.., shorter) than the distance between the detection embedding (e_{d}) **175** and the contrast-state OOI embedding (e_{cs-OOI}) **250,** the object detector **110** classifies the detection **125** as the object class **230** including the state **210.** For instance, the object detector **110** classifies the detection **125** as the object of interest **105.** Alternatively, when the distance between the detection embedding (e_{d}) **175** of a detection **125** and the contrast-state OOI embedding (e_{cs-OOI}) **250** is shorter than the distance between the detection embedding (e_{d}) **175** of a detection **125** and the OOI embedding (e_{OOI}) **225,** the object detector **110** classifies the detection **125** as the object class **230** with the contrast state **220.** For instance, the object detector **110** may not classify the detection **125** as the object of interest **105.**

The object detector **110** further provides an output **150** in response to a request **202.** In some examples, the output **150** includes an indication **204** that a detection **125** is determined as the object of interest **105.** In other examples, the output **150** includes an indication **204** that the detection **125** is not determined to be the object of interest **105.** The indication **204** may include the description **185** (e.g., a determined class **230,** a location (e.g., coordinates) of the detection **125** in the image **102,** and/or an identifier of the image **102**). In some implementations, the output **150** is provided to an image editor operative to edit the image **102** based on the indication **204.** For instance, the image editor may modify the detection **125,** such as by replacing the detection **125** with another object **104,** masking the detection **125,** or otherwise making a change to the image **102** based on the indication **204** of the determination. In some implementations, the image editor is a video editor, where a plurality of images **102** is received (e.g., in a stream or a live stream) and the video editor is able to edit the images **102** in real time or near-real time. In some examples, the image editor is included in the object detector **110.** In other examples, the image editor is a separate system.

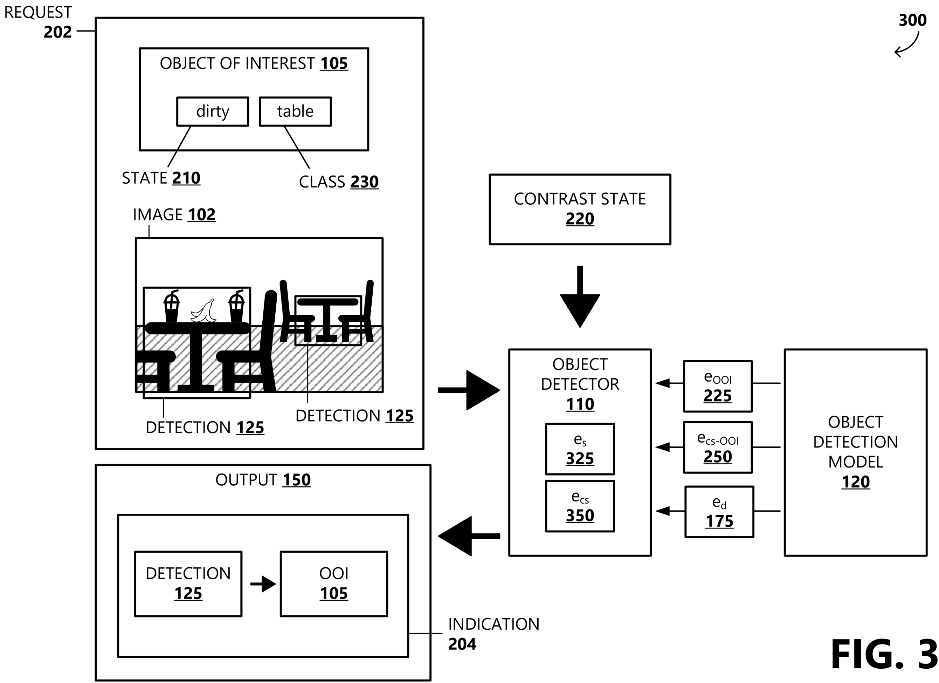

In some implementations, and with reference now to **FIGURE 3****,** the object detector **110** generates an embedding of the state **210** (a state embedding (eₛ) **325**) and an embedding of the contrast state **220** (a contrast state embedding (e_{cs}) **350**) in context of the detections **125.** For instance, the object detector **110** compares distances between the detection embedding (e_{d}) **175** for each detection **125** in an image **102** and the state embedding (eₛ) **325** and contrast state embedding (e_{cs}) **350.** In examples, the object detector **110** determines differences between the OOI embedding (e_{OOI}) **225** and the contrast-state OOI embedding (e_{cs-OOI}) **250** to determine the state embedding (eₛ) **325** and the contrast state embedding (e_{cs}) **350.** Further, the object detector **110** determines distances between the detection embeddings (e_{d}) **175** and the state embedding (eₛ) **325** and between the detection embeddings (e_{d}) **175** and the contrast-state embedding (e_{cs}) **350.** The object detector **110** further compares the distances. When the distance between the detection embedding (e_{d}) **175** of a detection **125** and the state embedding (eₛ) **325** is less (e.g., shorter) than the distance between the detection embedding (e_{d}) **175** and the contrast-state embedding (e_{cs}) **350,** the object detector **110** classifies the detection **125** as the object class **230** including the state **210.** For instance, the object detector **110** classifies the detection **125** as the object of interest **105.** Alternatively, when the distance between the detection embedding (e_{d}) **175** of a detection **125** and the contrast-state embedding (e_{cs}) **350** is shorter than the distance between the detection embedding (e_{d}) **175** of a detection **125** and the state embedding (eₛ) **325,** the object detector **110** classifies the detection **125** as the object class **230** with the contrast state **220.** For instance, the object detector **110** may not classify the detection **125** as the object of interest **105.** In some examples, the object detector **110** classifies the detection **125** as the object of interest **105** or as not the object of interest **105** based on a combination of classifications (e.g., a first classification described in **FIGURE 2** and a second classification described in **FIGURE 3**).

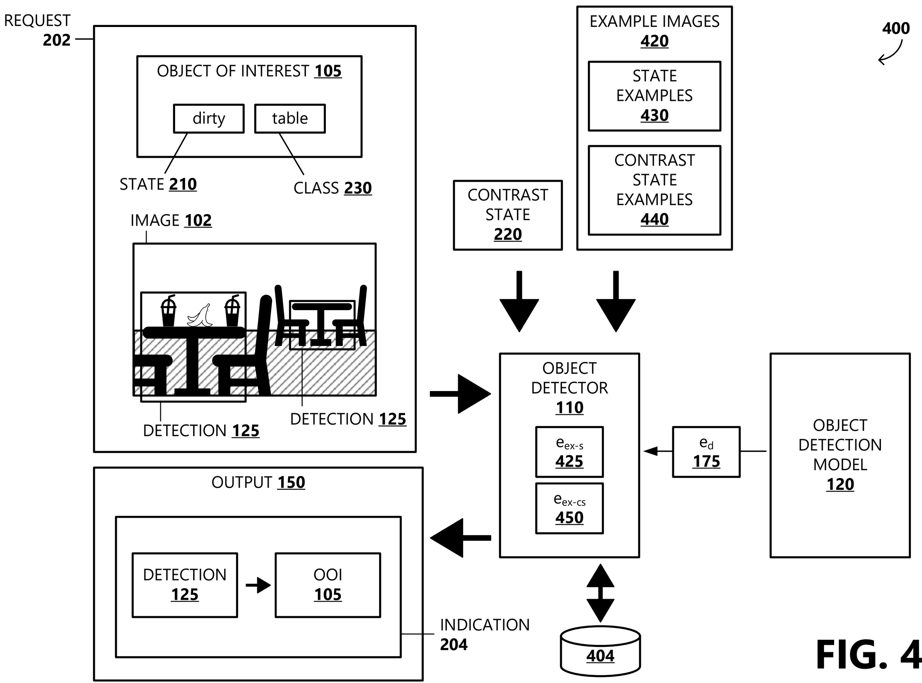

In some implementations, and with reference now to **FIGURE 4****,** the object detector **110** receives example images **420** of the object of interest **105** with the state **210** and example images **420** of the object of interest **105** with the contrast state **220.** For instance, the object detector **110** provides (e.g., via the user interface **140**) an indication for the user to provide (e.g., upload, share, or select) state examples **430** (e.g., example images **420** representing the object class **230** with the state **210**) and contrast state examples **440** (e.g., example images **420** representing the object class **230** with the contrast state **220**). In response, a user input is received including state examples **430** and contrast state examples **440.** In some implementations, the example images **420** include a minimal number (e.g. between 2 and 5) state examples **430** and contrast state examples **440.** In examples, the object detector **110** uses the object detection model **120** to determine an embedding for each state example **430** and contrast state example **440.** The object detector **110** further averages the determined embeddings of the state examples **430** to generate an average embedding for the state examples **430** (a state example embedding (eₑₓ₋ₛ) **425**). Additionally, the object detector **110** averages the determined embeddings of the contrast state examples **430** and generates an average embedding for the contrast state examples **440** (a contrast-state example embedding (e_{ex-cs}) **450**). In examples, the object detector **110** stores the state example embedding (eₑₓ₋ₛ) **425** and the contrast-state example embedding (e_{ex-cs}) **450** in a data store **404.** Thus, when a detection **125** is made of an object **104** of a same object class **230** as the object of interest **105,** the state example embedding (eₑₓ₋ₛ) **425** and the contrast-state example embedding (e_{ex-cs}) **450** are retrieved from the data store **404** and are compared to the detection embedding (e_{d}) **175** associated with the detection **125.**

For instance, the object detector **110** compares distances between the detection embedding (e_{d}) **175** and the state example embedding (eₑₓ₋ₛ) **425** and the contrast-state example embedding (e_{ex-cs}) **450.** When the distance between the detection embedding (e_{d}) **175** and the state example embedding (eₑₓ₋ₛ) **425** is less (e.g., shorter) than the distance between the detection embedding (e_{d}) **175** and the contrast-state example embedding (e_{ex-cs}) **450,** the object detector **110** classifies the detection **125** as the object class **230** including the state **210.** For instance, the object detector **110** classifies the detection **125** as the object of interest **105.** Alternatively, when the distance between the detection embedding (e_{d}) **175** of a detection **125** and the contrast-state example embedding (e_{ex-cs}) **450** is shorter than the distance between the detection embedding (e_{d}) **175** of a detection **125** and the state example embedding (eₑₓ₋ₛ) **425,** the object detector **110** classifies the detection **125** as the object class **230** with the contrast state **220.** For instance, the object detector **110** may not classify the detection **125** as the object of interest **105.** In some examples, the object detector **110** classifies the detection **125** as the object of interest **105** or not based on a combination of classifications (e.g., the first classification described in **FIGURE 2****,** the second classification described in **FIGURE 3****,** and/or the third classification described in **FIGURE 4**).

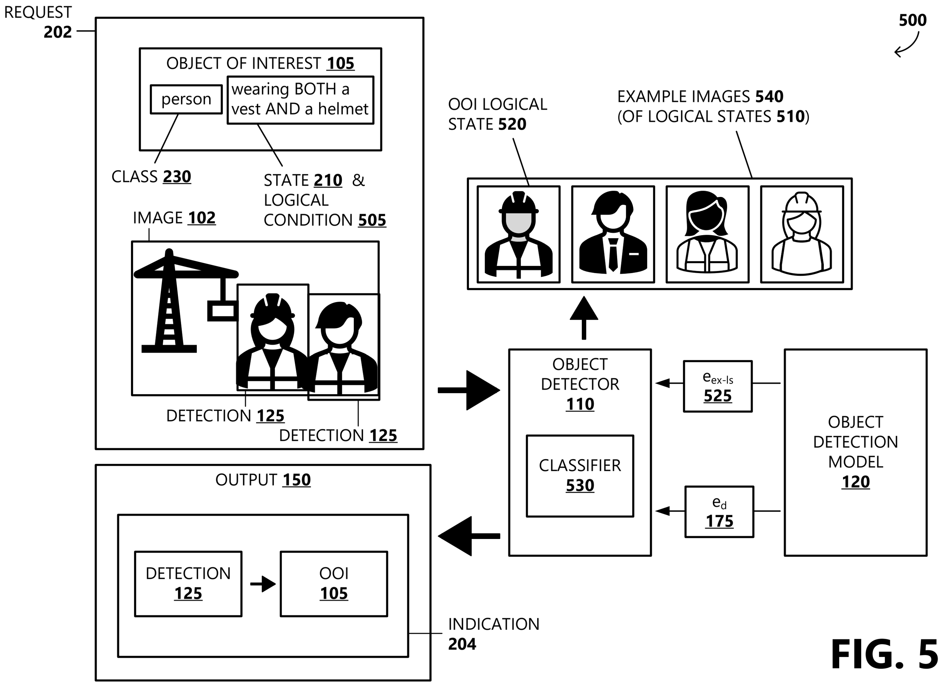

In some implementations, and with reference now to **FIGURE 5****,** the object of interest **105** has a state **210** defined by a logical condition **505.** For instance, the logical condition **505** is a statement that can be classified as true or false to determine the state **210** of an object **104.** For example, "a person wearing both a hat and a vest" is a logical condition **505** that is determined as true if the object **104** (e.g., a person) is detected and a logical state **510** corresponding to the object of interest **105** (referred to as an OOI logical state **520** (e.g., wearing both the hat and the vest)) is determined to be satisfied. Logical states **510** are the possible outcomes that the object **104** can have based on the logical condition **505.** For instance, logical states **510** not corresponding to the object of interest **105** are associated with the object of interest **105** with a contrast state **220** (e.g., a person wearing neither a hat nor a vest, a person wearing only a vest, and a person wearing only a hat). Accordingly, the logical condition **505** is determined as false if the object **104** (e.g., a person) is not detected or if the object **104** is detected and the OOI logical state **520** is determined not to be satisfied.

In examples, the object detector **110** receives example images **540** representing each logical state **510** associated with the logical condition **505** of the object of interest **105** (e.g., all logical states **510** of the logical condition **505** of the object of interest **105** are individually and collectively represented in the example images **540**). In some examples, the object detector **110** identifies the logical condition **505** and determines the logical states **510** associated with the logical condition **505** (e.g., using a generative model **130**). In further examples, the object detector **110** provides (e.g., via the user interface **140**) an indication for the user to provide (e.g., upload, share, or select) logical state examples (e.g., example images **540** representing each logical state **510**). In response, a user input is received including the logical state examples. In some implementations, the example images **540** include a minimal number (e.g. 5, 10, 20, 25) logical state examples. In examples, the object detector **110** uses the object detection model **120** to determine an embedding for each logical state example (a logical state example embedding (eₑₓ₋ₗₛ) **525**) and then train a classifier **530** to differentiate between the logical states **510** based on the logical state example embeddings (eₑₓ₋ₗₛ) **525.** Thus, when a detection **125** is made of an object **104** of a same object class **230** as the object of interest **105** (e.g., a person), the object detector **110** uses the classifier **530** to determine whether the logical condition **505** is true or false. For instance, the classifier **530** determines the logical state **510** that best matches the detection **125.** When the OOI logical state **520** (e.g., wearing both the hat and the vest) is determined to be satisfied, the logical condition **505** is determined as true. Further, the detection **125** is determined to be the object of interest **105.** Alternatively, when another of the logical states **510** (e.g., corresponding to a contrast state **220**) is determined to be satisfied, the logical condition **505** is determined as false and, thus, the detection **125** is not the object of interest **105.**

In some examples, when a detection **125** is determined to be the object of interest **105,** the output **150** includes a notification (e.g., a notification that a person wearing both a hat and a vest is detected). In other examples, when a detection **125** is determined not to be the object of interest **105,** the output **150** includes a notification (e.g., a notification that a person not wearing both a hat and a vest is detected). For instance, the system may be used to detect people out of compliance of particular safety protocols, a person wearing only a vest may be detected, and the notification provides an indication **204** that the detected person is determined to not be wearing both a hat and a vest.

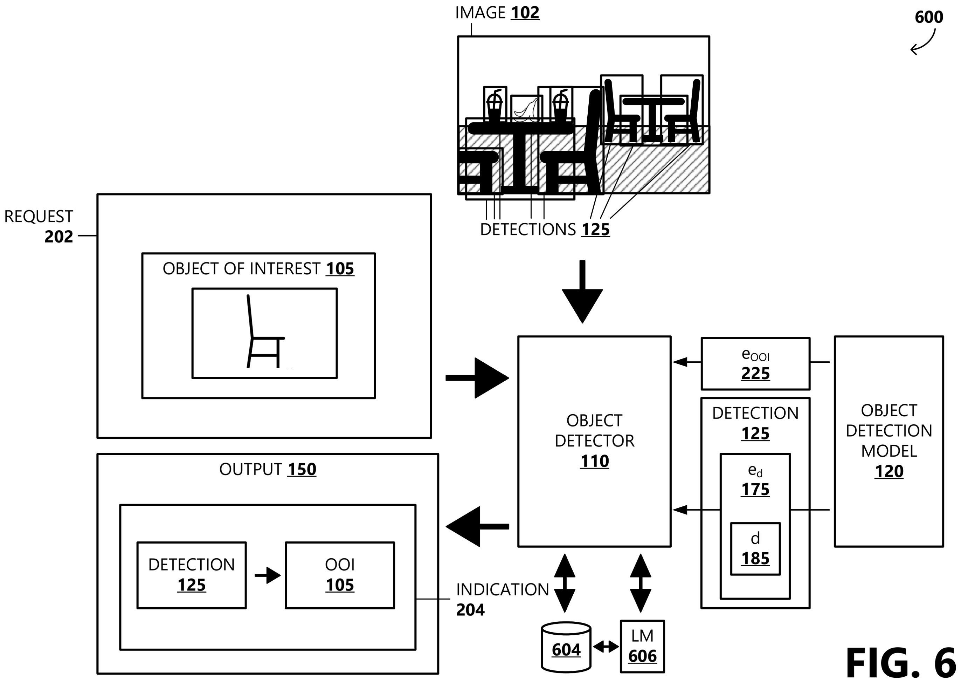

In some implementations, and with reference now to **FIGURE 6****,** the object detector **110** receives an image **102** prior to receiving or knowing the object of interest **105.** For instance, the object detector **110** uses the object detection model **120** to perform object detection on the image **102** and detect various types of objects **104** in the image **102.** The object detector **110** receives one or more detections **125** of objects **104** from the object detection model **120** including a detection embedding (e_{d}) **175** of each detection **125** and a description **185** of the detection **125.** In some examples, the description **185** includes a location (e.g., coordinates or a bounding box) of the detection **125** in the image **102** and an identifier of the image **102** (e.g., a video name, a frame number, an image number, and/or an image name). According to an aspect, the object detector **110** stores the detection embedding (e_{d}) **175** of each detection **125** in a data store **604.** In some examples, the data store **604** is a vector database. The object detector **110** stores the description **185** in association with the detection embedding (e_{d}) **175.**

In some examples, the object detector **110** determines a plurality of detections **125** have similar detection embeddings (e_{d}) **175** (e.g., a similarity measure of the detection embeddings (e_{d}) **175** are within a threshold distance) are identified, the object detector **110** saves the detection embedding (e_{d}) **175** as a key and the description **185** of the plurality of detections **125** as values of the detection embedding (e_{d}) **175.** For instance, multiple chairs (e.g., objects **104**) detected in an image **102** may be stored in association with one detection embedding (e_{d}) **175.** In other examples, the data store **604** is a graph database. For instance, the object detector **110** saves the detection embedding (e_{d}) **175** as a key and the description **185** of the plurality of detections **125** as nodes of the detection embedding (e_{d}) **175** with spatial relations (e.g., edges).

According to examples, after or during processing of one or more images **102,** the object detection model **120** receives an object of interest **105** indicating an object **104** that the user wants the object detector **110** to recognize. In some examples, the object of interest **105** is received in the form of text (e.g., free text) or an image that includes an example object representing or otherwise indicating the object of interest **105.** The object detector **110** may use natural language processing or a generative model **130** (e.g., a multimodal model) to analyze the text to determine the object of interest **105.** According to an example, the object detector **110** determines an OOI embedding (eoor) **225** for the object of interest **105** and performs one or more queries on the data store **604** for detection embeddings (e_{d}) **175** that match (e.g., within a threshold similarity measure of) the OOI embedding (e_{OOI}) **225.** When the object of interest **105** includes multiple objects **104** with relationships (e.g., a person wearing a scarf), the detector **110** may perform a plurality of simple queries and use logic to combine the query results with spatial constraints. The object detector **110** further determines the detections **125** corresponding to the detection embeddings (e_{d}) **175** are the object of interest 105. For instance, the object detector **110** provides an output **150** including an indication **204** that the detections **125** are determined as the object of interest **105.** In some examples, the descriptions **185** of the detections **125** are retrieved and provided with the output **150.** When the object of interest **105** has a state **210** or a logical condition **505,** the object detector **110** may use one or a combination of classifications (e.g., the first classification described in **FIGURE 2****,** the second classification described in **FIGURE 3****,** the third classification described in **FIGURE 4****,** and/or the fourth classification described in **FIGURE 5**) in combination with the fifth classification described in **FIGURE 6****.** In some implementations, an artificial intelligent language model **606** is trained based on data stored in the data store **604.** For instance, the user interface **140** may include a chat interface that allows the user to have a direct chat with the language model **606** to detect an object of interest **105** in one or more images **102.**

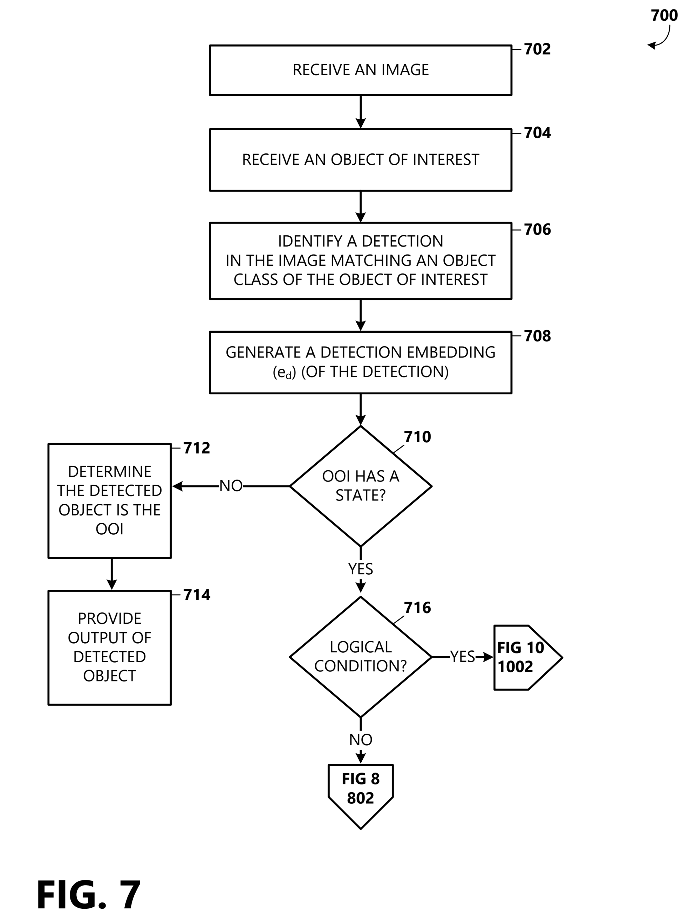

With reference now to **FIGURE 7****,** a flow diagram of an example method **700** for providing dynamic customization for object detection is depicted. At operation **702,** the object detector **110** receives, as input, image(s) **102** (e.g., from an image store or from a client **108**). In some examples, the image(s) **102** are streamed in real-time or near real-time as the image(s) **102** are captured.

At operation **704,** the object detector **110** receives an object of interest **105** indicative of an object **104** to detect in the image **102.** The object of interest **105** can be provided through various modalities, such as textual descriptions, reference images, or contextual relationships to other objects in the image **102.** For example, upon or prior to object detector **110** receiving the images **102,** a user or another entity (e.g., an application or a machine learning model) provides a textual description of the object of interest **105** (e.g., "a red car") to the object detector **110.** The user may provide the textual description to the object detector **110** via a user interface **140** associated with the object detector **110,** such as graphical user interface of a video capture and/or processing application or service. Alternatively, the entity may provide the textual description to the object detector **110** based on a predefined user setting/preference or learned facts. For instance, the entity may provide a textual description based on a predefined user setting (e.g., object of interest is set to "red cars") of the object detector **110** or an image processing application or service. In another instance, the entity may provide a textual description based on an identified pattern or relationship within data used to train a machine learning model. For example, the machine learning model determines that, based on previous user signals of a user (e.g., identified via user query history or click log data) a user frequently requests pictures and/or information related to red cars.

In other examples, the object of interest **105** is received in the form of an image (e.g., an image of a red car). The object detector **110** may receive the object of interest **105** in the form of an image, such as a reference image or a sample image containing the target object **104.** For instance, an entity may upload or select a picture of a red car to indicate that the object detector **110** should identify a similar object **104** in other images **102** or video frames. Such image-based input can be particularly useful in cases where textual descriptions may be ambiguous or insufficient. In some implementations, feature extraction techniques may be leveraged, such as by using CNNs to identify key attributes of the provided image and use them for object detection.

In other examples, the object of interest **105** is received by relation to another object 104 (e.g., "a red car with a driver wearing a blue shirt"). For instance, instead of receiving an indication of a single target object **104** (e.g., "a red car"), an entity may specify "a red car with a driver wearing a blue shirt." In this case, the object detector **110** may be instructed to detect not only the presence of a red car, but also a contextual relationship between the car and the driver.

In other examples, the object of interest **105** is received in the form of spoken command (e.g., "detect the red car"), etc. The client **108** may include a microphone and receive the spoken command. An automatic speech recognition (ASR) system integrated in or in communication with the object detector **110** may process the spoken command to determine the target object **104.** Such implementations are particularly beneficial for hands-free interactions, such as in smart surveillance systems, automotive applications, or accessibility-focused applications designed for users with disabilities.

In some implementations, operation **704** is performed prior to operation **702.** For instance, the object detector **110** may receive an indication of the target object **104** to detect before obtaining or analyzing the images **102.**

At operation **706,** the object detector **110** uses an object detection model **120** to process the image **102** to identify objects **104.** In examples, the object detection model **120** generates detection embeddings (e_{d}) **175** of detections **125** identified in the image **102.** For instance, the object detector **110** receives, from the object detection model **120,** detections **125,** their associated detection embeddings (e_{d}) **175,** and descriptions **185** (e.g., object class **230** and location). Further, the object detector **110** determines the detections **125** that match (e.g., within a threshold similarity measure) the object class **230** of the object of interest **105.**

At decision operation **710,** the object detector **110** determines whether the object of interest **105** includes a state **210** (e.g., an object **104** and an adjective, phrase, or other indication of a feature of the object **104**). When a state **210** is not identified, the method **700** proceeds to operation **712,** where the detections **125** are determined as the object of interest **105.** At operation **714,** the object detector **110** provides an output **150** including an indication **204** of the detections **125.**

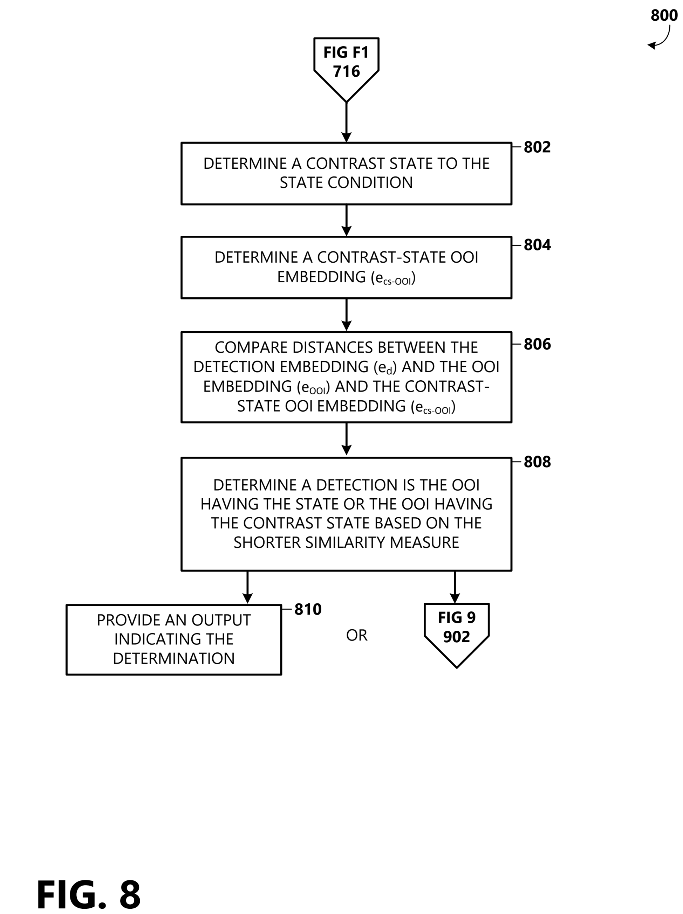

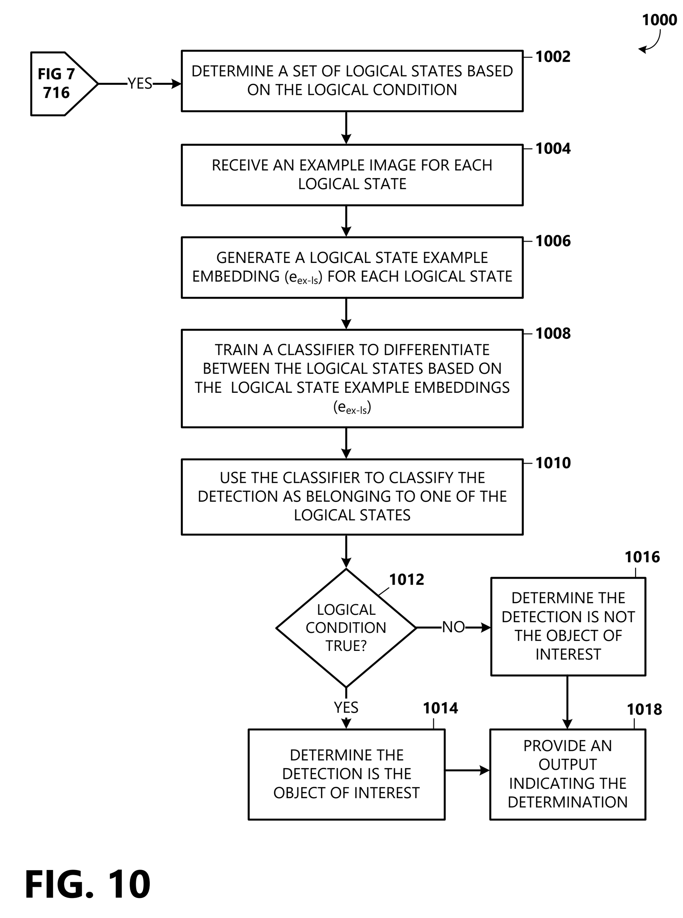

Alternatively, when the object detector **110** determines the object of interest **105** includes a state **210** at decision operation **710,** the method **700** proceeds to operation **716,** where a determination is made as to whether the state **210** is defined by a logical condition **505** (e.g., that can be classified as true or false to determine the state **210** of the detection **125**). When the state **210** is not defined by a logical condition **505,** the method **700** proceeds to operation **802** of method **800** depicted in **FIGURE 8****.** Alternatively, when the state **210** is defined by a logical condition **505,** the method **700** proceeds to operation **1002** of method **1000** depicted in **FIGURE 10****.**

With reference now to **FIGURE 8****,** a flow diagram of another example method **800** for providing dynamic customization for object detection (e.g., when a state **210** of the object of interest **105** is not defined by a logical condition **505**) is depicted. At operation **802,** the object detector **110** determines a contrast state **220** to the state **210.** In some implementations, the contrast state **220** is received in response to prompting the user for user input including the contrast state **220.** The user input may be received in the form of text or an image of an example object representing or otherwise indicating the object of interest **105** with the contrast state **220** to the state **210** that the user wants the object detector **110** to detect. In other implementations, the contrast state **220** is received in response to the object detector **110** requesting the contrast state **220** from a generative model **130.** In some examples, a plurality of contrast states **220** to the state are received or otherwise determined.

At operation **804,** the object detector **110** uses the object detection model **120** to determine a contrast-state OOI embedding (e_{cs-OOI}) **250** representing the object class **230** of the object of interest **105** and each contrast state **220.**

At operation **806,** the object detector **110** compares the detection embeddings (e_{d}) **175** and the OOI embedding (e_{OOI}) **225** (e.g., representing the object class **230** and the state **210**) and the detection embeddings (e_{d}) **175** and the contrast-state OOI embeddings (e_{cs-OOI}) **250** based on a similarity threshold measure.

At operation **808,** the object detector **110** determines whether the detections **125** are the object of interest **105** including the state **210** based on a closer measure of similarity between the detection embeddings (e_{d}) **175** and the OOI embeddings (e_{OOI}) **225** or whether the detections **125** are the object of interest **105** with a contrast state **220** or based on a closer measure of similarity between the detection embeddings (e_{d}) **175** and the contrast-state OOI embeddings (e_{cs-OOI}) **250.** When a determination is made that a detection **125** is the object of interest **105** including the state **210,** the detection **125** is classified as the object of interest **105.**

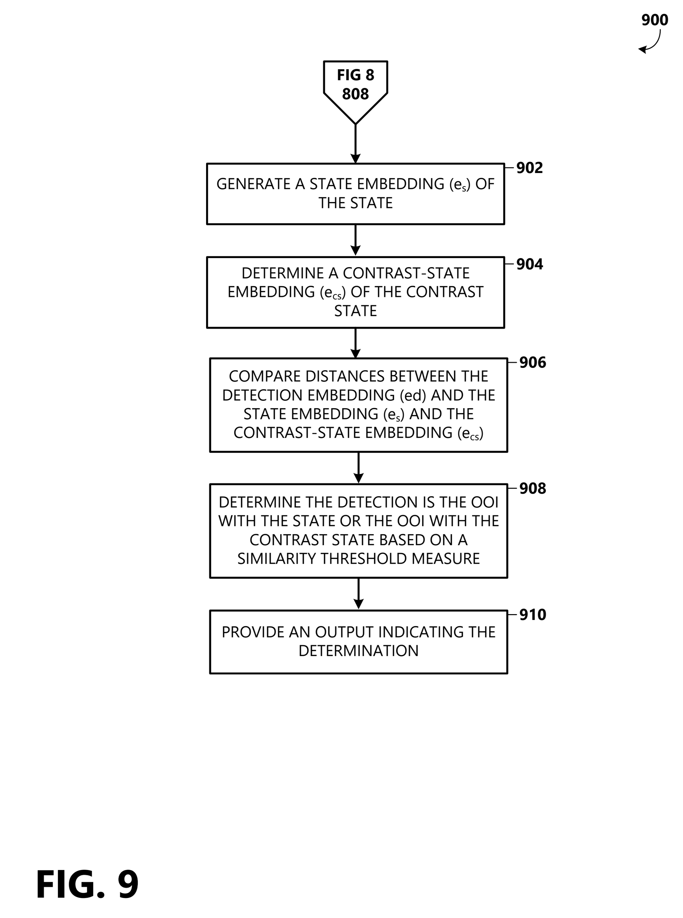

At operation **810,** the object detector **110** provides an output **150** including an indication **204** of the detections **125** determined/classified as the object of interest **105.** Or, in some implementations, the method **800** proceeds to operation **902** of method **900** depicted in **FIGURE 9** for another classification.

With reference now to **FIGURE 9****,** a flow diagram of another example method **900** for providing dynamic customization for object detection is depicted. At operation **902,** the object detector **110** determines a first difference between the OOI embedding (e_{OOI}) **225** and the contrast-state OOI embedding (e_{cs-OOI}) **250** (e.g., using mathematical operations on vectors) to determine a state embedding (eₛ) **325**) of the state **210.** At operation **904,** the object detector **110** determines a second difference between the OOI embedding (e_{OOI}) **225** and the contrast-state OOI embedding (e_{cs-OOI}) **250** (e.g., using embeddings arithmetic) to determine a contrast state embedding (e_{cs}) **350**) of the contrast state **220.**

At operation **906,** the object detector **110** determines distances between the detection embeddings (e_{d}) **175** for each detection **125** in an image **102** and the state embedding (eₛ) **325** and between the detection embeddings (e_{d}) **175** and the contrast-state embedding (e_{cs}) **350.** Further, the object detector **110** compares the distances.

At operation **908,** the object detector **110** determines whether the detections **125** are the object of interest **105** including the state **210** based on a closer measure of similarity between the detection embeddings (e_{d}) **175** and the state embedding (eₛ) **325** or whether the detections **125** are the object of interest **105** with a contrast state **220** based on a closer measure of similarity between the detection embeddings (e_{d}) **175** and the contrast-state embeddings (e_{cs}) **350.** When a determination is made that a detection **125** is the object of interest **105** including the state **210,** the detection **125** is classified as the object of interest **105.**

At operation **910,** the object detector **110** provides an output **150** including an indication **204** of the detections **125** determined/classified as the object of interest **105.**

With reference now to **FIGURE 10****,** a flow diagram of another example method **1000** for providing dynamic customization for object detection (e.g., when a state **210** of the object of interest **105** is defined by a logical condition **505**) is depicted. At operation **1002,** the object detector **110** determines a set of logical states **510** (e.g., possible outcomes that the object **104** can have) based on the logical condition **505.** The logical states **510** includes at least one OOI logical state **520** corresponding to the object of interest **105** (e.g., when satisfied, causes the logical condition **505** to be true) and at least one other logical state **510** that, when satisfied, causes the logical condition **505** to be false. In some examples, the object detector **110** prompts the user for the set of logical states **510** and receives the logical states **510** in response. In other examples, the object detector **110** requests the set of logical states **510** from a generative model **130.**

At operation **1004,** the object detector **110** receives example images **540** representing each logical state **510.** In some examples, the object detector **110** prompts the user for the example images **540** and receives the example images **540** in response. In further examples, a minimal number of example images **540** are received.

At operation **1006,** the object detector **110** uses the object detection model **120** to determine a logical state example embedding (eₑₓ₋ₗₛ) **525** representing each logical state example in the example images **540.** Further, at operation **1008,** a classifier **530** is trained to differentiate between the logical states **510** based on the logical state example embeddings (eₑₓ₋ₗₛ) **525.**

At operation **1010,** the object detector **110** uses the classifier **530** to determine the logical state **510** that best matches the detection **125** (e.g., based on a similarity threshold measure).

At decision operation **1012,** a determination is made as to whether the logical condition **505** is true or false. For instance, the object detector **110** determines whether the OOI logical state **520** is satisfied (e.g., is a match to the detection **125**). When the OOI logical state **520** is satisfied, the method **1000** proceeds to operation **1014,** where logical condition **505** is determined to be true and the detection **125** is determined to be the object of interest **105.** Alternatively, when another of the logical states **510** is determined to be satisfied (e.g., and the OOI logical state **520** is not satisfied), the logical condition **505** is determined as false. Thus, at operation **1016,** the detection **125** is determined not to be the object of interest **105.**

At operation **1018,** the object detector **110** provides an output **150** indicating the determination made at operation **1014** or **1016.**

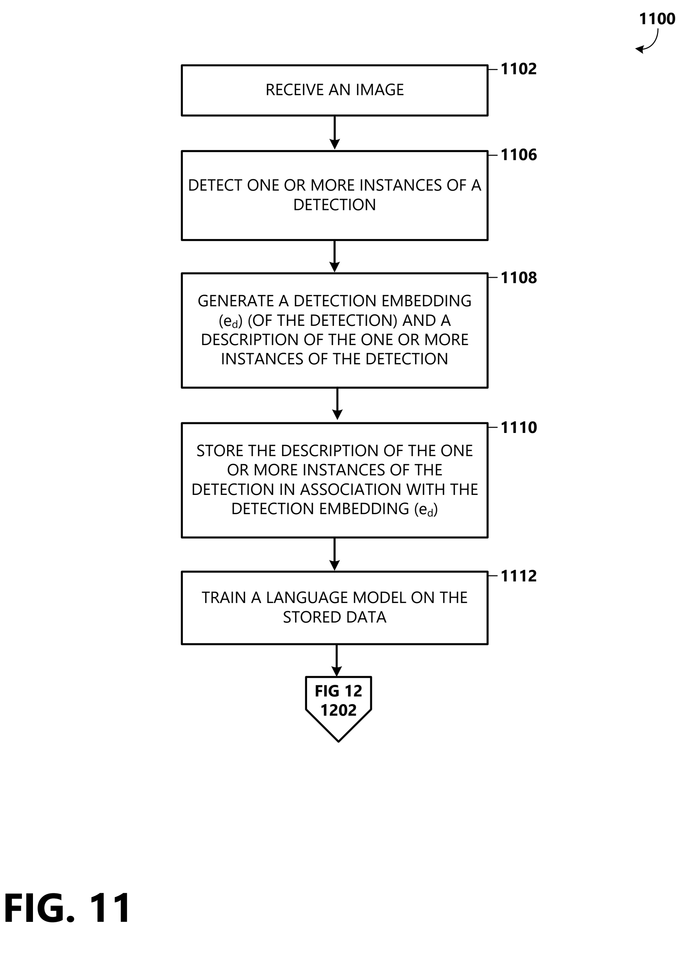

With reference now to **FIGURE 11****,** a flow diagram of another example method **1100** for providing dynamic customization for object detection is depicted. At operation **1102,** the object detector **110** receives one or more images **102.** For instance, the one or more images **102** may be received from an image store, from a client **108,** streamed in real-time or near real-time as the image(s) **102** are captured, etc.

At operation **1106,** the object detector **110** uses the object detection model **120** to detect one or more instances of a detection **125** in the images **102.** For instance, the object detection model **120** processes the images **102** prior to receiving the object of interest **105** indicating an object **104** that the user wants the object detector **110** to detect. In examples, the object detector **110** detects various types of objects **104** in the image **102** and, at operation **1108,** the object detector **110** receives one or more detections **125** of objects **104** from the object detection model **120** including a detection embedding (e_{d}) **175** of each detection **125** and a description **185** of the detection **125.** In some examples, the description **185** includes a location of the detection **125** in the image **102** and an identifier of the image **102** (e.g., a video name, a frame number, an image number, and/or an image name).

At operation **1110,** the object detector **110** stores the detection embedding (e_{d}) **175** of each detection **125** in a data store **604,** such as a vector database or a graph database. In examples, the object detector **110** stores the description **185** of each instance of the detection **125** in association with the detection embedding (e_{d}) **175.** In some examples, the object detector **110** saves the detection embedding (e_{d}) **175** as a key and the description **185** of the plurality of detections **125** as values of the detection embedding (e_{d}) **175.** In other examples, the object detector **110** saves the detection embedding (e_{d}) **175** as a key and the description **185** of the plurality of detections **125** as nodes of the detection embedding (e_{d}) **175** with spatial relations (e.g., edges).

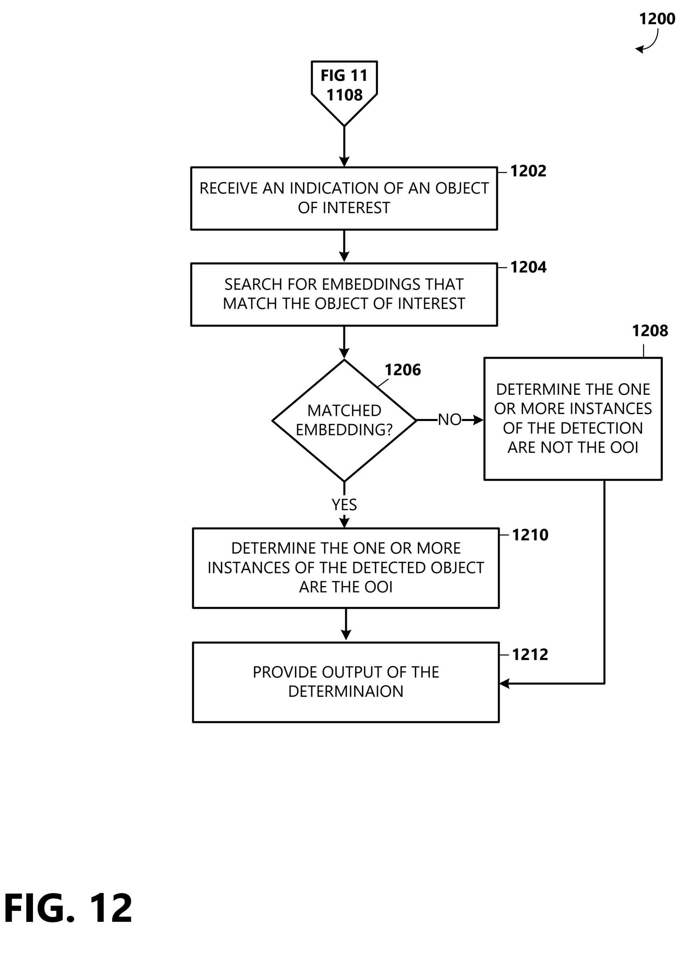

In examples, a language model **606** is trained to work on the latent space of the detection embeddings (e_{d}) **175** and associated descriptions **185** determined by the object detection model **120** and stored in the data store **604.** In some examples, the user interface **140** provided by the object detector **110** includes a chat interface that allows the user to have a direct chat with the language model **606** to provide an object of interest **105** and to receive an output **150** in response. Optionally, at operation **1112,** the language model **606** is trained based on data stored in the data store **604.** In some implementations, the method **1100** proceeds to operation **1202** of method **1200** depicted in **FIGURE 12****.**

With reference now to **FIGURE 12****,** a flow diagram of another example method **1200** for providing dynamic customization for object detection is depicted. At operation **1202,** the object detector **110** receives an object of interest **105.** In some examples, the object of interest **105** is received in the form of text (e.g., free text) or an image that includes an example object representing or otherwise indicating the object of interest **105.** The object detector **110** may use natural language processing, a generative model **130,** or a multimodal model to analyze the text or image to determine the object of interest **105.**

At operation **1204,** the object detector **110** determines an OOI embedding (e_{OOI}) **225** for the object of interest **105** and performs one or more queries on the data store **604** for detection embeddings (e_{d}) **175** that match (e.g., within a threshold similarity measure of) the OOI embedding (e_{OOI}) **225.** When the object of interest **105** includes multiple objects **104** with relationships (e.g., a person wearing a scarf), the detector **110** may perform a plurality of simple queries and use logic to combine the query results with spatial constraints to identify matching detection embeddings (e_{d}) **175.**

At decision operation **1206,** the object detector **110** makes a determination as to whether a detection embedding (e_{d}) **175** matches the OOI embedding (e_{OOI}) **225** within a threshold similarity measure. When the detection embedding (e_{d}) **175** does not match the OOI embedding (e_{OOI}) **225,** the method **1200** proceeds to operation **1208,** where the object detector **110** determines the one or more instances of the detection **125** are not the object of interest **105.** Alternatively, when the detection embedding (e_{d}) **175** matches the OOI embedding (e_{OOI}) **225** within a threshold similarity measure, the method **1200** proceeds to operation **1210,** where the object detector **110** determines the one or more instances of the detection **125** are the object of interest **105.**

At operation **1212,** the object detector **110** provides an output **150** including an indication **204** of the determination (e.g., that the detections **125** are determined to be the object of interest **105** or not to be the object of interest **105**)

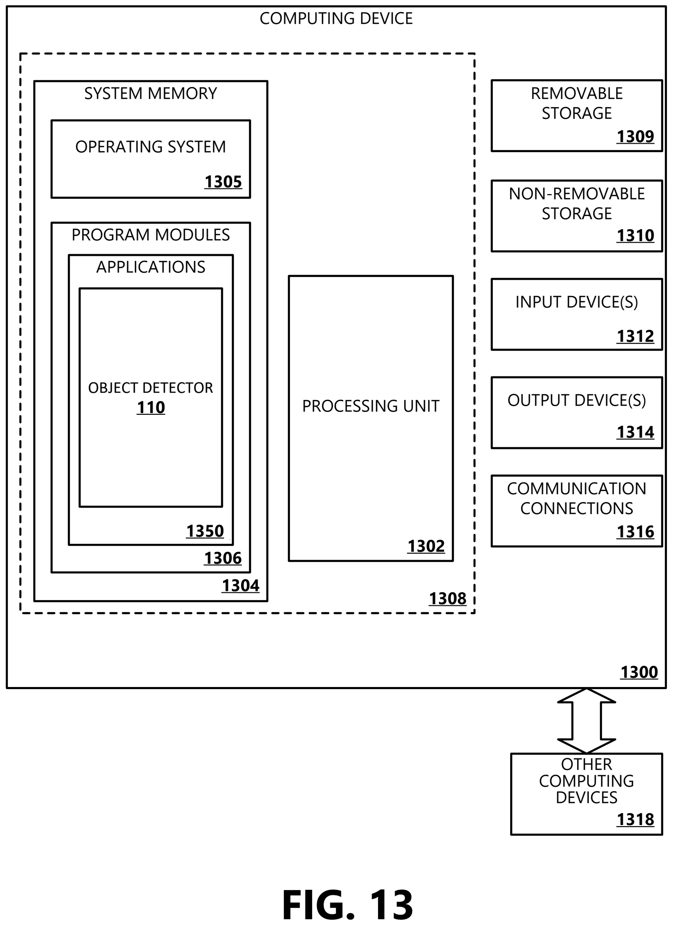

**FIGURE 13** and the associated description provide a discussion of a variety of operating environments in which examples of the invention may be practiced. However, the devices and systems illustrated and discussed with respect to **FIGURE 13** is for purposes of example and illustration and is not limiting of a vast number of computing device configurations that may be utilized for practicing aspects of the invention, described herein. **FIGURE 13** is a block diagram illustrating physical components (i.e., hardware) of a computing device **1300** with which examples of the present disclosure may be practiced. In a basic configuration, the computing device **1300** may include at least one processing unit and a system memory **1304.** in examples, the processing unit(s) (e.g., processors) are referred to as a processing system **1302.** Depending on the configuration and type of computing device, the system memory **1304** may comprise volatile storage (e.g., random access memory), non-volatile storage (e.g., read-only memory), flash memory, or any combination of such memories. The system memory **1304** may include an operating system **1305** and one or more program modules **1306** suitable for running software applications **1350** (e.g., regression detector **110**).

The operating system **1305,** for example, may be suitable for controlling the operation of the computing device **1300.** Furthermore, aspects of the invention may be practiced in conjunction with a graphics library, other operating systems, or any other application program and is not limited to any particular application or system. This basic configuration is illustrated in **FIGURE 13** by those components within a dashed line **1308.** The computing device **1300** may have additional features or functionality. For example, the computing device **1300** may also include additional data storage devices (removable and/or non-removable) such as, for example, magnetic disks, optical disks, or tape. Such additional storage is illustrated in **FIGURE 13** by a removable storage device **1309** and a non-removable storage device **1310.**

As stated above, a number of program modules and data files may be stored in the system memory **1304.** While executing on the processing system **1302,** the program modules **1306** may perform processes including one or more of the operations of the methods **700, 800, 900, 1000, 1100,** and/or **1200** illustrated in **FIGURES 7****,** **8****,** **9****,** **10****,** **11****,** and/or **12.** Other program modules that may be used in accordance with examples of the present invention and may include applications such as electronic mail and contacts applications, word processing applications, spreadsheet applications, database applications, slide presentation applications, drawing or computer-aided application programs, etc.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in **FIGURE 13** may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to generating suggested queries, may be operated via application-specific logic integrated with other components of the computing device **1300** on the single integrated circuit (chip). Examples of the present disclosure may also be practiced using other technologies capable of performing logical operations such as, for example, AND, OR, and NOT, including mechanical, optical, fluidic, and quantum technologies.

The computing device **1300** may also have one or more input device(s) **1312** such as a keyboard, a mouse, a pen, a sound input device, a touch input device, etc. The output device(s) **1314** such as a display, speakers, a printer, etc. may also be included. The aforementioned devices are examples and others may be used. The computing device **1300** may include one or more communication connections **1316** allowing communications with other computing devices **1318.** Examples of suitable communication connections **1316** include RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **1304,** the removable storage device **1309,** and the non-removable storage device **1310** are all computer storage media examples (i.e., memory storage). Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device **1300.** Any such computer storage media may be part of the computing device **1300.** Computer storage media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, radio frequency (RF), infrared, and other wireless media.

The present disclosure is supplemented by the following examples.

Example 1: A method, comprising: receiving a first image; receiving an object of interest having an object class and a state; identifying a detection in the first image based on the object class; generating a first representation of the detection; determining a contrast state to the state; generating a second representation of the object class and the state; generating a third representation of the object class and the contrast state; comparing a first similarity measure between the first representation and the second representation to a second similarity measure between the first representation and the third representation; generating a first classification of the detection based on whether the first similarity measure is less than the second similarity measure or whether the second similarity measure is less than the first similarity measure; and providing an output of the first classification.

Example 2: The method of Example 1, wherein generating the first classification comprises classifying the detection as the object of interest when the first similarity measure is less than the second similarity measure.

Example 3: The method of Example 2, further comprising modifying the detection in the first image.

Example 4: The method of Example 1, further comprising: generating a fourth representation representing the state by determining a first difference between the second representation and the third representation; generating a fifth embedding representing the contrast state by determining a second difference between the second representation and the third representation; comparing: a third similarity measure between the first representation and the fourth representation to a fourth similarity measure between the first representation and the fifth representation; generating a second classification classifying the detection based on whether the third similarity measure is less than the fourth similarity measure or whether the fourth similarity measure is less than the third similarity measure; and providing an output of the second classification.

Example 5: The method of Example 4, wherein generating the second classification comprises classifying the detection as the object of interest when the third similarity measure is less than the fourth similarity measure.

Example 6: The method of Example 1, wherein determining the contrast state to the state comprises: providing a request to a language model for the contrast state to the state; and receiving a result from the language model including the contrast state; or providing, via a user interface, an indication to provide the contrast state to the state; and receiving a user input via the user interface including the contrast state.

Example 7: The method of Example 6, wherein: the user input includes free text; and generating the third representation comprises generating a representation of the free text.

Example 8: The method of Example 6, wherein: the user input includes a second image including an example of the object class and the contrast state; and generating the third representation comprises generating a representation of the example of the object class and the contrast state.

Example 9: The method of Example 8, wherein: the second image comprises a plurality of second images including a plurality of examples of the object class and the contrast state; and generating the third embedding comprises determining an average embedding of the plurality of examples of the object class with the contrast state.

Example 10: The method of Example 6, wherein: the indication to provide the contrast state to the state includes an indication to provide a second image including an example of the object class and the state; receiving the user input further comprises receiving the second image; and generating the second representation comprises generating the second representation based on the example of the object class and the state included in the second image.

Example 11: The method of Example 1, wherein the contrast state comprises a plurality of contrast states.

Example 12: The method of Example 1, further comprising: determining the state includes a logical condition; determining a set of logical states based on the logical condition, wherein a first logical state of the set of logical states corresponds to the state and one or more second logical states of the set of logical states correspond to the contrast state; receiving a second image for each logical state in the set of logical states, where each second image includes an example of the object class and the logical state; generating, for each logical state in the set of logical states, a fourth representation of each example of the object class and the logical state; comparing a third similarity measure between the first representation and each fourth representation; generating a second classification of the detection based on the third similarity measure; and providing an output of the second classification.

Example 13: The method of Example 12, wherein generating the second classification comprises classifying the detection as the object of interest when the third similarity measure between the first representation and the fourth representation of the first logical state is a shortest of the third similarity measures.

Example 14: The method of Example 12, further comprising: training a classifier to differentiate between the logical states based on the fourth representation of each example; and using the classifier to generate the second classification.

Example 15: The method of Example 1, wherein comparing the first similarity measure and the second similarity measure comprises: applying a first threshold to the first similarity measure; and applying a second threshold to the second similarity measure.

Example 16: A system, comprising: a processing system; and memory storing instructions that, when executed, cause the system to perform operations comprising: receiving a first image; receiving an object of interest having an object class and a state; identifying a detection in the first image based on the object class; generating a first embedding of the detection; determining a contrast state to the state; generating a second embedding of the object class and the state; generating a third embedding of the object class and the contrast state; comparing a first distance between the first embedding and the second embedding to a second distance between the first embedding and the third embedding; generating a first classification of the detection based on whether the first distance is less than the second distance or whether the second distance is less than the first distance; and providing an output of the first classification.

Example 17: The system of Example 16, the operations further comprising: generating a fourth embedding representing the state by determining a first difference between the second embedding and the third embedding; generating a fifth embedding representing the contrast state by determining a second difference between the second embedding and the third embedding; comparing: a third distance between the first embedding and the fourth embedding to a fourth distance between the first embedding and the fifth embedding; generating a second classification, classifying the detection based on whether the third distance is less than the fourth distance or whether the fourth distance is less than the third distance; and providing an output of the second classification.

Example 18: The system of Example 16, wherein determining the contrast state to the state comprises: providing a request to a language model for the contrast state to the state; and receiving a result from the language model including the contrast state; or providing, via a user interface, an indication to provide the contrast state to the state; and receiving a user input via the user interface including the contrast state.

Example 19: The system of Example 16, the operations further comprising: determining the state includes a logical condition; determining a set of logical states based on the logical condition, wherein a first logical state of the set corresponds to the state and one or more second logical states of the set correspond to the contrast state; receiving a second image for each logical state in the set, where each second image includes an example of the object class and the logical state; generating, for each logical state, a fourth embedding of each example of the object class and the logical state; comparing a third distance between the first embedding and each fourth embedding; generating a second classification of the detection based on the third distance; and providing an output of the second classification.

Example 20: A computer readable medium storing instructions that, when executed by a computer, cause the computer to: receive a first image; receive an object of interest having an object class and a state; determining whether the state includes a logical condition; when the state does not include the logical condition: identify a detection in the first image based on the object class; generate a first embedding of the detection; determine a contrast state to the state; generate a second embedding of the object class and the state; generate a third embedding of the object class and the contrast state; compare a first distance between the first embedding and the second embedding to a second distance between the first embedding and the third embedding; and generate a first classification of the detection based on whether the first distance is less than the second distance or whether the second distance is less than the first distance; and provide an output of the first classification; and when the state includes the logical condition: determine a set of logical states based on the logical condition, wherein a first logical state of the set corresponds to the state and one or more second logical states of the set correspond to the contrast state; receive a second image for each logical state in the set, where each second image includes an example of the object class and the logical state; generate, for each logical state, a fourth embedding of each example of the object class and the logical state; compare a third distance between the first embedding and each fourth embedding; generate a second classification of the detection based on the third distance; and provide an output of the second classification.

Disclosed are therefore systems and methods for dynamic customization for object detection. An object detector uses an object detection model (e.g., an open vocabulary model) to detect and classify objects. The object detector supports customization of classifications without requiring the model to be retrained. Embeddings are used to differentiate between various states of detections, enhancing accuracy and relevance of the detection process. In examples, the object detector handles logical conditions by creating a classifier trained to differentiate between various combinations of objects. Aspects of the present disclosure support the use of images for customization, allowing users to provide examples from which the object detector described herein can learn. In further examples, capabilities of the object detector extend to processing live video streams, where users can mark examples in real-time. In some examples, the object detector leverages a generative model (e.g., to provide state contrasts), allowing the system to be adaptable to complex conditions.

Aspects of the present invention, for example, are described above with reference to block diagrams and/or operational illustrations of methods, systems, and computer program products according to aspects of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved. Further, as used herein and in the claims, the phrase "at least one of element A, element B, or element C" is intended to convey any of: element A, element B, element C, elements A and B, elements A and C, elements B and C, and elements A, B, and C.

The description and illustration of one or more examples provided in this application are not intended to limit or restrict the scope of the invention as claimed in any way. The aspects, examples, and details provided in this application are considered sufficient to convey possession and enable others to make and use the best mode of claimed invention. The claimed invention should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the broader aspects of the general inventive concept embodied in this application that do not depart from the broader scope of the claimed invention.

## Claims

1. A method (700), comprising:
receiving (702) a first image;
receiving (704) an object of interest having an object class and a state;
identifying (706) a detection in the first image based on the object class;
generating (708) a first representation of the detection;
determining (802) a contrast state to the state;
generating a second representation of the object class and the state;
generating (804) a third representation of the object class and the contrast state;
comparing (806) a first similarity measure between the first representation and the second representation to a second similarity measure between the first representation and the third representation;
generating (1010) a first classification of the detection based on
whether the first similarity measure is less than the second similarity
measure or whether the second similarity measure is less than the first
similarity measure; and
providing (1018) an output of the first classification.

2. The method of claim 1, wherein generating
the first classification comprises classifying the detection as the object of interest when the first similarity measure is less than the second similarity measure.

3. The method of claim 2, further comprising modifying the detection in the first image.

4. The method of any preceding claim, further comprising:
generating a fourth representation representing the state by determining a first difference between the second representation and the third representation;
generating a fifth embedding representing the contrast state by determining a second difference between the second representation and the third representation;
comparing: a third similarity measure between the first representation and the fourth representation to a fourth similarity measure between the first representation and the fifth representation;
generating a second classification classifying the detection based on whether the third similarity measure is less than the fourth similarity measure or whether the fourth similarity measure is less than the third similarity measure; and
providing an output of the second classification.

5. The method of claim 4, wherein generating the second classification comprises classifying the detection as the object of interest when the third similarity measure is less than the fourth similarity measure.

6. The method of any preceding claim, wherein determining the contrast state to the state comprises:
providing a request to a language model for the contrast state to the state; and
receiving a result from the language model including the contrast state; or
providing, via a user interface, an indication to provide the contrast state to the state; and
receiving a user input via the user interface including the contrast state.

7. The method of claim 6, wherein:
the user input includes free text; and
generating the third representation comprises generating a representation of the free text.

8. The method of claim 6 or 7, wherein:
the user input includes a second image including an example of the object class and the contrast state; and
generating the third representation comprises generating a representation of the example of the object class and the contrast state.

9. The method of claim 8, wherein:
the second image comprises a plurality of second images including a plurality of examples of the object class and the contrast state; and
generating the third embedding comprises determining an average embedding of the plurality of examples of the object class with the contrast state.

10. The method of any one of claims 6 to 9, wherein:
the indication to provide the contrast state to the state includes an indication to provide a second image including an example of the object class and the state;
receiving the user input further comprises receiving the second image; and
generating the second representation comprises generating the second representation based on the example of the object class and the state included in the second image.

11. The method of any preceding claim, wherein the contrast state comprises a plurality of contrast states.

12. The method of any preceding claim, further comprising:
determining the state includes a logical condition;
determining a set of logical states based on the logical condition, wherein a first logical state of the set of logical states corresponds to the state and one or more second logical states of the set of logical states correspond to the contrast state;
receiving a second image for each logical state in the set of logical states, where each second image includes an example of the object class and the logical state;
generating, for each logical state in the set of logical states, a fourth representation of each example of the object class and the logical state;
comparing a third similarity measure between the first representation and each fourth representation;
generating a second classification of the detection based on the third similarity measure; and
providing an output of the second classification.

13. The method of claim 12, wherein generating the second classification comprises classifying the detection as the object of interest when the third similarity measure between the first representation and the fourth representation of the first logical state is a shortest of the third similarity measures.

14. A system (100), comprising:
a processing system (1302); and
memory (1304) storing instructions that, when executed, cause the system to perform operations comprising:
receiving (702) a first image;
receiving (704) an object of interest having an object class and a state;
identifying (706) a detection in the first image based on the object class;
generating (708) a first embedding of the detection;
determining (802) a contrast state to the state;
generating a second embedding of the object class and the state;
generating (804) a third embedding of the object class and the contrast state;
comparing (806) a first distance between the first embedding and the second embedding to a second distance between the first embedding and the third embedding;
generating (1010) a first classification of the detection based on whether the first distance is less than the second distance or whether the second distance is less than the first distance; and
providing (1018) an output of the first classification.

15. A computer readable medium storing instructions that, when executed by a computer, cause the computer to:
receive (702) a first image;
receive (704) an object of interest having an object class and a state;
determining (716) whether the state includes a logical condition;
when the state does not include the logical condition:
identify (706) a detection in the first image based on the object class;
generate (708) a first embedding of the detection;
determine (802) a contrast state to the state;
generate a second embedding of the object class and the state;
generate (804) a third embedding of the object class and the contrast state;
compare (806) a first distance between the first embedding and the second embedding to a second distance between the first embedding and the third embedding; and
generate (1010) a first classification of the detection based on whether the first distance is less than the second distance or whether the second distance is less than the first distance; and
provide (1018) an output of the first classification; and
when the state includes the logical condition:
determine (1002) a set of logical states based on the logical condition, wherein a first logical state of the set corresponds to the state and one or more second logical states of the set correspond to the contrast state;
receive (1004) a second image for each logical state in the set, where each second image includes an example of the object class and the logical state;
generate (1006), for each logical state, a fourth embedding of each example of the object class and the logical state;
compare a third distance between the first embedding and each fourth embedding;
generate a second classification of the detection based on the third distance; and
provide an output of the second classification.
